# EUROPÄISCHE PATENTSCHRIFT

(11) **EP 2 252 202 B1**
(45) Veröffentlichungstag und Bekanntmachung des Hinweises auf die Patenterteilung: **08.06.2011**
(21) Anmeldenummer: 09721683.2
(22) Anmeldetag: 12.03.2009
(51) Int. Cl.: A61B 5/0215, G01L 7/08, G01L 19/00

(54) **VERBINDUNGSELEMENT ZUR VERBINDUNG EINES MESSWERTAUFNEHMERS MIT EINEM ABGEDICHTETEN FLUIDSYSTEM**
CONNECTING ELEMENT FOR CONNECTING A MEASUREMENT RECORDER TO A SEALED FLUID SYSTEM
ELEMENT DE LIAISON POUR RELIER UN ENREGISTREUR DE VALEURS DE MESURE A UN SYSTEME FLUIDIQUE ETANCHE

(30) Priorität: 20.03.2008 DE 102008015322
(43) Veröffentlichungstag der Anmeldung: 24.11.2010
(73) Patentinhaber: Sartorius Stedim Biotech GmbH, 37079 Göttingen (DE)
(72) Erfinder: GLOCKER, Raymond, 63739 Aschaffenburg (DE)
(74) Vertreter: Polypatent
(86) Internationale Anmeldenummer: PCT/EP2009/001757
(87) Internationale Veröffentlichungsnummer: WO 2009/115223

(56) Entgegenhaltungen:
- WO-A-02/03854
- US-A- 4 109 535
- US-A- 4 163 964
- US-A1- 2003 200 812
- US-A1- 2004 135 666

## Beschreibung

Die Erfindung betrifft ein Systemelement zur lösbaren abgedichteten Verbindung eines Meßwertaufnehmers mit einem Fluidsystem, mit einer mit dem Fluidsystem durchströmbar verbindbaren Messkammer, wobei die Messkammer in einem Gehäuse gebildet ist und ein Teil der Wandung der Messkammer durch eine Membran gebildet ist, die wesentlich nachgiebiger ist, als der übrige Teil der Wandung der Messkammer wobei der an die Membran anschließende Teil der Wandung der Messkammer eine Außenwand bildet mit einem Rand, auf dem die Membran aufliegt, und die Membran einen umlaufenden Wulst aufweist, der sich auf der der Messkammer zugewandten Seite der Membran befindet

Solche Systemelemente sind in der medizinischen Technik unter der umgangssprachlichen Bezeichnung "Dom" oder "Druckdom" bekannt, was von der kuppelförmigen Ausbildung der Messkammer herrührt. Ein Messwertaufnehmer, mit dem ein solcher Dom zur Druckmessung bzw. -überwachung üblicherweise verbunden wird, ist unter der Bezeichnung "Transducer" bekannt, worunter ein Messwandler in einem geeigneten Gehäuse verstanden wird, der die üblicherweise über die Membran des Druckdomes übertragenen Drücke und Druckänderungen in ein elektrisches Signal umsetzt. Sie dienten bisher dazu, die Messung von Drücken in Flüssigkeiten bei der Untersuchung und Behandlung von Menschen und Tieren vorzugsweise über elektronische Diagnose- und Überwachungsgeräte zu ermöglichen. Der Vorteil bei einer solchen Anordnung ist die Möglichkeit, das Systemelement als preiswertes und einfach zu entsorgendes Einwegteil auszubilden und dabei einen hygienisch einwandfreien und sicheren Abschluss des Fluidsystems sicherzustellen.

Für die Drucküberwachung beim Spülen von Körperhöhlen ist beispielsweise in DE 42 19 888 A1 ein Durchfluß-Druckwandler mit einem solchen Verbindungselement beschrieben, der dem vorgesehenen Einsatzgebiet entsprechend für einen großen Volumendurchsatz ausgebildet ist.

Zur Überwachung der hämodynamischen Parameter eines Patienten, insbesondere von Intensivpatienten, ist es heute üblich, neben der Aufzeichnung eines EKG's auch die invasiven Drücke in das Patienten-Monitoring, dass heißt, die Zustandsüberwachung der vitalen Körperfunktionen des Patienten, aufzunehmen. Es werden je nach Überwachungsgrad zwischen einem bis vier Drücken (arteriell, pulmonal-arteriell, LAP und venös) gemessen.

Hierzu wird ein Katheter mit einem eingebundenem Monitoring-Set benutzt. Die Positionierung der Endöffnung des Katheters definiert den Meßpunkt im Körper des Patienten. Als Monitoring-Set wird eine Zusammenstellung derjenigen meist aus hygienischen Gründen zur Einmalverwendung bestimmten Teile bezeichnet, die die Verbindungen zwischen dem Patienten und dem sogenannten Monitor herstellen. Als Monitor bezeichnet man das elektronische Überwachungs- und Aufzeichnungssystem, mit dem die entsprechenden Meßdaten ausgewertet und angezeigt werden, und das im Bedarfsfalle entsprechende Alarmsignale ausgibt, wenn Meßdaten vorgegebene Sollbereiche verlassen.

Am Beispiel einer Einschwemmkatheteruntersuchung findet sich eine allgemeine Beschreibung hierzu in Buchwalsky, Rainer: Einschwemmkatheter: Technik, Auswertung u. prakt. Konsequenzen (Beiträge zur Kardiologie, Bd. 29); Erlangen: perimed Fachbuch-Verlagsgesellschaft, 1985, Seiten 106-109.

Das am Katheter zu befestigende Monitoring-Set besteht aus einem unbelüfteten Infusionsgerät zur Zuführung von Infusionslösungen zu dem Patienten, einem Spülsystem, welches eine kontinuierliche Spülrate von üblicherweise 3 ml/h an der Katheterspitze zu Vermeidung von Okklusion durch Thromben gewährleistet, gegebenenfalls mit Schnellspülfunktion für Sonderfälle und einem Druckdom. Der Druckdom überträgt über seine flexible Membran das Drucksignal auf einen wiederverwendbaren Transducer (Drucksensor). Ein solcher Druckdom wurde bisher mit einer Schraub- oder Bajonettverbindung auf einem solchen Transducer befestigt (siehe dazu DE 42 19 888 A1, Spalte 3, Zeilen 28 bis 30).

Weitere Elemente eines Monitoring-Set's sind die Druckschläuche (farbig gekennzeichnet) und eventuell ein Dreiwegehahn, um Medikamente zuführen zu können, oder ein Blutentnahmesystem zur Entnahme von Blut für weitere Untersuchungen.

Einmaltransducer, die den Druckmeßsensor in einem Durchflußgehäuse enthalten, sind in der Durchflußkammer einfach röhrenförmig gestaltet, um ein Fangen von Luftblasen zu vermeiden, was insbesondere die dynamischen Messeigenschaften stark verschlechtert. Sie haben aber den Nachteil, dass die wertvolle Elektronik im Einmalartikel integriert ist und daher bei jedem Wechseln des Monitoring-Sets weggeworfen wird und mit zu entsorgen ist. Unter Beachtung der Hygieneanforderungen muss ein solcher Austausch spätestens jeden zweiten Tag erfolgen. Dies bringt nicht nur den Nachteil mit sich, dass die noch funktionsfähige Elektronik mit jedem Wechsel ersetzt wird und entsprechende Kosten mit sich bringt, sondern auch das Vorhandensein von elektronischen Bauelementen eine zusätzliche besondere und damit kostenintensive Behandlung als Elektronikschrott bei der Entsorgung erfordert.

Aus diesem Grund sind zumindest in Europa wieder mehrfach verwendbare Dom-Systeme auf dem Vormarsch. Die wertvolle Elektronik, insbesondere der Drucksensor, befindet sich in einem speziellen Gehäuse. Ein solches Teil wird üblicherweise als Transducer bezeichnet. Ein oder mehrere Transducer werden in einer speziellen Halteplatte integriert. Die Halteplatte wird mittels einer Klemm- oder Schraubvorrichtung z.B. an einem Infusionsständer befestigt. Von den Transducern in der Halteplatte werden die Druckmessdaten über ein oder mehrere Kabel zum Monitor übertragen.

Sollte bisher ein Zweifach- oder sogar ein Dreifach-Monitoring-Set mit der üblichen bei mehrfach verwendbaren Transducem anzutreffenden Schraub- oder Bajonettverbindung auf mehreren Transducem montiert werden, waren die dazu nötigen Drehbewegungen mit Einschränkungen nur beim ersten Transducer möglich. Beim Aufsetzen auf den zweiten Transducer störte bereits das Vorhandensein des Aufbaus auf dem ersten Transducer. Ein Aufsetzen eines zweiten Doms auf den zweiten Transducer war ohne Herausnehmen des Transducers aus einer gemeinsamen Halteplatte nicht möglich.

Diese komplizierte Handhabung ist nicht nur störend, sie ist auch ein absolutes Hindernis, Halteplatten mit fest eingebauten Transducem und rückseitiger Verkabelung zu konstruieren.

Dieses Problem wird auch nicht gelöst durch ein Systemelement der Art, wie es in DE 35 25 536 A1 beschrieben ist. Dort und in der EP 0 208 955 A2 wird zur Vermeidung von Beschädigungen insbesondere der Membran des Verbindungselementes eine Befestigung vorgeschlagen, bei der eine gegenseitige Verdrehung von Verbindungselement und Transducer nicht erforderlich ist. Dazu sollen an zwei Stellen des Umfangs des Gehäuses des Verbindungselementes zusätzliche Befestigungselemente vorgesehen werden, wie schwenkbar montierte Klammern oder nach Art von Schließhaken.

Dort wird vorgeschlagen, diese Befestigungselemente oder Fortsätze zur Handhabung der Befestigungselemente nach unten über die Membran hinausragen zu lassen. Dadurch soll eine visuelle Kontrolle möglich sein, daß eine Verriegelung der vorgesehenen Befestigungselement auch durchgeführt wurde. Ferner soll dies die Handhabung beim Entfernen des Verbindungselementes von dem Transducer vereinfachen. Eine Kombination mit in Halteplatten befestigten Transducern ist dadurch jedoch praktisch ausgeschlossen.

Weiterhin sollen gemäß der Lehre dieser Druckschrift die Gehäuse von Druckdom und Transducer sich direkt berühren (siehe dort, Spalte 9/10), wodurch zwar die Membranen von Druckdom und Transducer "satt aufeinander" liegen sollen, eine Vorspannung der Membranen soll jedoch nachteilig sein und vermieden werden (a.a.O., Spalte 4, Zeilen 21 ff.).

Die EP 0 701 830 A1 beschreibt eine Vorrichtung und ein Verfahren vorzugsweise zur Anwendung im Bereich der Druckmessung in blutführenden Leitungen bei Dialyseeinrichtungen, bei der Hämofiltration und der Hämodiafiltration. Dazu soll der Druck indirekt über eine Gassäule (Luft) gemessen werden, die über eine in einem Gehäuse befindliche elastische Membran mit der Flüssigkeitssäule in einer Leitung in Verbindung steht. Der Druck der Gassäule wird über geeignete und übliche Sensoren (Druckmessdosen) erfasst. Um den aufgrund der mechanisch begrenzten Auslenkbarkeit der Membran und die Kompressibilität der Gassäule bedingte Beschränkung des Messbereiches zu erweitern, wird eine Vorrichtung und ein Verfahren vorgeschlagen, mit dem die Gasmenge in dem gasführenden Teil der Messeinrichtung in Abhängigkeit von dem zu messenden Gasdruck erhöht oder erniedrigt wird und dadurch eine Beweglichkeit der Membran und damit die Weitergabe von Druckänderungen erhalten bleibt.

Die Veränderung der Gasmenge erfolgt über Pumpeinrichtungen in Form einer über eine Steuerung betätigten peristaltischen Pumpe. Durch die Kompressibilität des gemäß der EP-Anmeldung zwischenzuschaltenden Gasvolumens wird eine Art akustischer Tiefpass gebildet, der schnelle Druckänderungen oder höherfrequente Druckschwingungen dämpft bzw. unterdrückt. Das System nach der Druckschrift ist praktisch nur für Messung statischer Drücke geeignet oder zur Überwachung von Mittelwerten, wobei die Bildung des Druckmittelwertes durch die Dämpfungscharakteristik des Systems einstellbar ist, z.B. über das zwischen Membran und Druckaufnehmer geschaltete Gasvolumen. Für Anordnungen solcher Art ist durch Vorbenutzung eine obere Grenzfrequenz von etwa 0,1 Hz für die Erfassung von Druckänderungen bekannt.

In DE 29 30 869 C2 wird beschrieben eine Druckmesskapsel für die Befestigung an einem Messwandler, die ein Gehäuse aufweist, in dem innerhalb eines ringförmigen Wulstes ein Hohlraum gebildet ist, der durch eine auf den ringförmigen Wulst geklebte Membran geschlossen ist. Über zwei Anschlussröhren soll der Hohlraum mit einer Flüssigkeit oder einem Gas gefüllt werden können.

Wesentlicher Gegenstand der Beschreibung ist die Ausbildung von Fortsätzen eines zylindrischen Gehäusekörpers der Druckmesskapsel zur Bildung einer Renkverbindung mit entsprechend ausgebildeten Gegenstücken an einem Messwandler. Insbesondere wird hervorgehoben eine elastische Ausbildung der Fortsätze zur Bildung definierter rastbarer Endstellungen der Partner der Renkverbindung, wobei Druckaufnehmer und Druckmesskapsel zur Herstellung der mechanischen Verbindung gegeneinander verdreht werden müssen. Durch die federelastische Ausbildung der druckmesskapselseitigen Teile der Renkverbindung sollen Fertigungstoleranzen ausgleichbar und eine rastbare Endstellung von Druckmesskapsel zu Druckaufnehmer erreichbar sein.

Durch die Raststellung soll zugleich eine definierte Vorspannkraft auf die Druckaufnehmer ausgeübt werden, wobei sich die Erfinder vorstellen, dass diese so gleichbleibend reproduzierbar mit verschiedenen Druckaufnehmern ausfallen soll, dass ein Nullpunktabgleich der verwendeten Auswerteelektronik nicht mehr erforderlich sei.

Die zitierte Druckschrift beschreibt eine Renkverbindung als besonders vorteilhaft, deren bekannte Nachteile insbesondere eine reibende Relativbewegung zwischen den zu verbindenden Partnern der Renkverbindung ist.

Das Europäische Patent EP 0 330 891 B1 beschreibt eine Anordnung zum Übertragen des Druckes eines Fluides auf ein anderes Fluid. Dazu wird ein längliches Gehäuse vorgeschlagen, dessen Innenraum in Form eines Rotationsellipsoids durch eine flexible Membran in zwei Räume aufgeteilt wird, wobei diese beiden Räume derart angeordnet sein können, dass sie jeweils benachbarte Bereiche des Innenraums bilden, oder auch konzentrisch. Einer der Räume soll mit jeweils einer Einlass- und einer Auslassöffnung versehen sein, um mit einem ersten Fluid durchströmt zu werden, wie beispielsweise Blut.

Der zweite Raum ist mit einer einzigen Öffnung versehen, über die ein in dem zweiten Raum einbringbares Fluid mit z.B. einer externen Druckmesseinrichtung verbunden sein soll, um etwa den Druck des Blutes, der durch den ersten Raum strömt, zu messen.

Als erfindungswesentlich wird beschrieben und beansprucht, die Membran in einem ungespannten oder sogar gefalteten Zustand in das Gehäuse einzubringen, wodurch sich die dortigen Erfinder eine Verbesserung der Messmöglichkeiten des Druckes und insbesondere der Messung auch negativer Drücke erhoffen, ohne dass hierzu nähere Angaben gemacht werden.

In WO 97/39679 ist eine Kopplung einer Art Druckdom mit einem Transducer beschrieben, wobei die Messkammer des "Druckdomes" jedoch nicht durch eine Membran gegenüber der Umgebung abgeschlossen ist, sondern durch ein isolierendes Gel. Bei der Montage von Druckdom und Transducer soll die Fließfähigkeit des Gels das Herausdrücken von Luft zwischen Druckdom und Transducer durch Entlüftungskanäle ermöglichen.

In US 4,562,845 ist eine Verschraubung beschrieben, die zu einer dichten Koppelung eines Druckdomes mit einem Transducer führt. Da die dort beschriebene Vorrichtung Teil des ebenfalls dort beschriebenen Systems zur Überwachung von anderen Transducem auf Fehlfunktion sowie zur Erfassung von Luftblasen in Blutdrucküberwachungssystemen sein soll, weist der dort beschriebene Druckdom keine Membran zur sterilen Abdichtung des Fluidsystems gegenüber der Umgebung und dem Transducer auf.

Aus US 4,462,409 ist ein Druckdom bekannt, der allerdings nicht zum Einschleifen in einen extrakorporalen Kreislauf oder zur Durchströmung mit einer Infusionslösung vorgesehen ist, sondern als Abschluss einer Stichleitung, die hydraulisch über ein Infusionssystem mit dem Kreislauf eines Patienten zur Druckübertragung gekoppelt werden kann. Die Messkammer dieses Druckdoms ist über eine Membran von einem Transducer getrennt. Der Transducer umfasst ein zweiteiliges Gehäuse, wobei ein erstes Gehäuseteil (dort 53) eine Verbindungsfläche zur Anlage der Membran des Druckdomes aufweist. Auf dieser Verbindungsfläche des Gehäuseteils ist eine Rippe (63a) vorgesehen, die einen festen Sitz einer Wulst der Membran in einer Nut in dem Gehäuse und damit eine sichere Abdichtung der Messkammer sicherstellen soll.

Allerdings ist der Druckdom mit dem Gehäuseteil des Transducers durch Schweißen fest verbunden (a.a.O., Spalte 4, Zeilen 60-67), so dass eine Anordnung mit einem Einwegdom und einem wiederverwendbaren Transducer nicht möglich ist.

Die US 4,920,972 beschreibt ein System aus einem Einmaldom und einem wiederverwendbaren Transducer, bei dem die Messkammer im Dom sowie der Transducer jeweils über eine Membran abgeschlossen sind. Im übrigen beschäftigt sich die Lehre dieser Druckschrift mit dem Ersatz von Öl zur Druckübertragung innerhalb des Transducers durch ein Gel, dass nach Einbringen in flüssiger Form in das Transducergehäuse erst durch Aufheizen des Transducers auf 65° C für vier Stunden zu der gewünschten Gelform aushärtet. Durch diese Anordnung soll die oberer Grenzfrequenz eines Transducers vergrößert werden.

Aus US 5,551,300 ist ein Set aus einem Einweg-Druckdom und einem wiederverwendbaren Transducer bekannt, bei dem sowohl die Messkammer des Druckdoms, als auch ein flüssigkeitsgefüllter Messraum des Transducers durch eine flache, auf die jeweiligen Gehäuse aufgeklebte Membran abgeschlossen sind. Dabei ist bei dem Transducer ein Druckausgleich des flüssigkeitsgefüllten Messraumes des Transducers vorgesehen derart, dass der Messraum in Strömungsverbindung mit einem Ausgleichsgefäß steht, das über eine elastische Membran gegenüber der Umgebung abgeschlossen ist.

Das Flüssigkeitssystem soll dabei mit einem leichten Überdruck befüllt sein, um einen Kontakt der beiden druckübertragenden Membranen und damit die Einsatzfähigkeit des Systems sicherzustellen. Um während der Messung einen Druckausgleich im Flüssigkeitssystem des Transducers zu verhindern, was Voraussetzung für eine Druckmessung ist, wird vorgeschlagen, die Transducermembran etwas abstehen zu lassen und eine Verbindung der flüssigkeitsgefüllten Messkammer des Transducers mit dem Druckausgleichsbehälter über ein Loch auf der Stirnseite des Transducers vorzusehen, das ebenfalls von der Transducermembran überdeckt wird. Durch Verbindung mit dem Druckdom wird die Membran an das Gehäuse des Transducers mechanisch angelegt und dadurch die Ausgleichsöffnung verschlossen, so dass lediglich die in der Messkammer des Transducers verbleibende Flüssigkeit eine Signalübertragung auf einen Piezosensor dämpfen kann.

Aus DE 44 19 593 A1 ist eine Vorrichtung zum Messen des Drucks eines Mediums bekannt, insbesondere zur Druckmessung in extrakorporalen Blutkreisläufen, z. B. einem Dialysesystem, bei dem ein Wegwerfelement vorgesehen ist, das eine Messkammer enthält und über zwei Schlauchanschlüsse verfügt, wobei die Messkammer durch eine Membran geschlossen sein soll, die in eine umlaufende Nut eingelegt und mittels eines metallischen Spannringes oder durch Verklebung dort befestigt sein soll. Als besonders zweckmäßig wird dort hervorgehoben, dass um den Teil der Messkammer herum, der mit der Membran in Verbindung steht, ein umlaufender Wulst insbesondere durch einen O-Ring gebildet wird, der die Membran im Bereich der Verbindung zur Messkammer über die Oberfläche des Elementes hinaus anhebt. Dadurch soll es möglich sein, eine gute Ankoppelung der Membran an einen Druckmessaufnehmer zu erhalten, wenn das Element in eine Schublade des Messsystems eingelegt und der Druckaufnehmer vorzugsweise pneumatisch oder über eine Spindel zu dem Element hin verfahren wird.

Weiterhin erfordert die Vorrichtung gemäß der DE 44 19 593 A1 einen enorm hohen Montageaufwand für das Messelement, insbesondere im Hinblick auf die Montage der Membran, was zusätzlich zu einem großen Aufwand hinsichtlich der Überprüfung der Qualität der Montage aus Gründen der Produkthaftung führt. Weiterhin kann die Vielzahl der Teile und insbesondere die zwischen Membran und O-Ring gebildeten Hohlräume zudem zu Problemen bei der Sterilisation führen. Im Hinblick auf den Montage- und Qualitätssicherungsaufwand führt dies zu derart hohen Kosten, dass ein solches Messsystem für den Einweggebrauch nicht akzeptabel ist.

Weiterhin erfordert die entsprechende Anordnung des Druckmesssensors einen enorm hohen apparativen Aufwand, insbesondere im Hinblick auf die Verfahreinrichtung für den Sensor und die von der Verfahrstrecke abhängige Kalibrierung des Sensors, so dass ein solches System aufgrund des Handhabungsaufwandes und der enormen Kosten für den klinischen und Laboralltag ungeeignet ist.

Aus DT 21 29 670 A ist eine sogenannte Unterdruckdose bekannt, bei der in einer festen Metalldose eine elastische Membran angeordnet ist, wobei als erfindungswesentlich die Ausbildung der Membran und eine Befestigung an einem Stößel beschrieben ist, so dass die Membran bei der Herstellung auf einer Seite der Dose anliegt und nach Vorspannung durch eine Feder in Abhängigkeit von dem absoluten Luftdruck, mit der die Membran auf einer Seite beaufschlagt wird, eine Stellarbeit über den Stößel verrichten und insbesondere in Abhängigkeit von der Vorspannung über die Feder dabei einen beträchtlichen Hub ausführen kann. Diese Einrichtung ist jedoch nicht dazu vorgesehen, durchströmbar zu sein und aufgrund der Ausbildung und Zielsetzung gänzlich ungeeignet zur Messung von Drücken, insbesondere in extrakorporalen Kreisläufen.

Aus DE 93 17 751 U1 ist ein Druckanzeigegerät bekannt, dass bei Erreichen eines bestimmten vorgegebenen Druckwertes durch einen unter einer durchsichtigen Scheibe sichtbaren Farbumschlag von grün auf rot oder umgekehrt anzeigt und/oder über einen Stößel einen elektrischen Schalter oder Taster betätigen kann. Hierzu wird im Zwischenraum zwischen einer Membran und einem Messgehäuse eine Flüssigkeit eingeschlossen. Wird ein Grenzdruck auf der anderen Seite der Membran, die dem Verdampfungspunkt der Flüssigkeit entspricht, unterschritten, verdampft die Flüssigkeit und die Membran führt zusammen mit einem daran befestigten Stößel einen schlagartigen Hub aus, so dass mit dem Stößel ein Wamtaster oder dergleichen betätigt werden kann. Durch eine entsprechende Einfärbung der Flüssigkeit wird die Durchsicht auf eine signalfarbene Scheibe auf der Membran behindert, die bei Verdampfen der Flüssigkeit schlagartig sichtbar wird und damit eine Signalwirkung entfalten soll.

Es ist ohne weiteres ersichtlich, dass diese Vorrichtung zur kontinuierlichen Messung von Drücken nicht geeignet ist.

Aus WO 99/37983 ist schließlich ein Druckdom bekannt, der besonders ausgebildet und geeignet ist zum Einsatz in extrakorporalen Blutkreisläufen, z.B. bei der Blutwäsche, der ferner besonders gut handhabbar ist durch eine lösbare Schnappverbindung zur Befestigung an einem Transducer.

Aus der DE 198 02 615 A1 und der WO 99/37983 ist ein Druckdom bekannt, bei dem die Meßkammer in Höhe einander gegenüberliegender Teile der Wandung, die einen Rand der Meßkammer bilden, in dem der Membran gegenüberliegenden Teil der Wandung, der eine Decke der Meßkammer bildet, jeweils eine Eintrittsöffnung und eine Austrittsöffnung aufweist, und die Decke in einem zentralen Bereich der Meßkammer eingezogen ist, so daß sich ein ringkanalförmiger Teil der Meßkammer mit größerem Abstand zwischen Membran und Decke und ein zentraler Bereich der Meßkammer mit einem geringeren Abstand zwischen Decke und Membran ergibt, und die Wandung der Meßkammer mit Ausnahme von Ein- und Austrittsöffnung und dem Übergang von Membran zum restlichen Teil der Wandung kantenfrei (verrundet) ausgebildet ist.

Im Bereich der Membran ist eine Einrichtung zur mechanischen Kopplung des Verbindungselementes mit dem Messwertaufnehmer vorgesehen, die Teil einer lösbaren Einspreizverbindung ist, die gebildet wird durch krallenförmige Halteelemente in Form von Haken zum Eingriff in eine entsprechende Nut oder Hinterschneidung des Messwertaufnehmers bzw. einer zugehörigen Befestigungseinrichtung.

Aus der DE 100 32 616 A1, der WO 2002/003854 A1, der US 6,880,404 B2 und der DE 201 22 806 U1 ist ein Druckdom bekannt, bei dem die Membran einen umlaufenden Wulst aufweist, der sich auf der der Messkammer zugewandten Seite der Membran befindet, wobei der Wulst in eine in einem Gehäuse gebildete Nut eingreift, die um die Messkammer verläuft und die der Messkammer zugewandte Wandung (Innenwandung) der Nut eine geringere Höhe aufweist, als die von der Messkammer abgewandte Wandung (Außenwandung) der Nut. Durch die beschriebene Ausgestaltung soll insbesondere in Verbindung mit einem angepassten Messaufnehmer beim Aufsetzen des Druckdoms auf den Transducer ein Einschluss von Luft zwischen den Membranen vermieden und somit verbesserte Messeigenschaften im Hinblick auf die Messung von Unterdrücken sowie das dynamische Übertragungsverhalten der Gesamtanordnung erhalten werden.

Durch offenkundige Vorbenutzung der Fa. Smiths Medical, London, GB, ist unter der Typenbezeichnung MX848X2SC ein Einweg-Druckdom mit einem daran befindlichen Dreiwegehahn und einem Rückschlagventil bekannt. Bei dem bekannten Druckdom ist die Membran ebenfalls mit einem umlaufenden Wulst versehen, der in eine die Messkammer außenseitig umgebende Nut eingesetzt ist. Die Nut mit dem darin befindlichen Teil der Membran wird durch eine Ringscheibe außenseitig teilweise überdeckt, die mit dem Gehäusekörper des Druckdomes verschweißt oder verklebt ist.

Bei Versuchen hat sich herausgestellt, dass die Membran eines solchen Druckdoms bei Beaufschlagung mit höheren Drücken, als bei der Blutdrucküberwachung von menschlichen Patienten üblich, also bei Überdrücken deutlich oberhalb von 260 mm Hg, ohne mechanische Stütze durch einen aufgesetzten Transducer sich so weit vorwölbt, dass durch die große Elastizität des Materials der die Membran haltende Wulst regelrecht aus der Nut herausgezogen wird, ohne dass dies durch die Ringscheibe verhindert werden kann. Ein Herausrutschen der Membran ist jedoch nicht akzeptabel, da damit die Abdichtung des Fluidsystems aufgehoben ist, was zur Kontamination der Umgebung, jedoch auch zur Kontamination des Fluids führt und in vielen Bereichen unter allen Umständen vermieden sein soll.

Daher wurden Systemelemente der eingangs erwähnten Art bisher für untauglich zum Einsatz bei höheren Drücken und insbesondere außerhalb der Überwachung von Vitalfunktionen in der Medizin gehalten.

Aus der US 2003/0200812 A1 ist ein Systemelement nach Oberbegriff von Anspruch 1 bekannt.

Ein pneumatischer oder hydraulischer Drucksensor mit einem Druckdom zu Ermittlung des hydrostatischen Drucks der Wasserfüllung im Waschkorb einer Waschmaschine ist beispielsweise aus dem Dokument US-A-4,163,964 bekannt.

Der Erfindung liegt die Aufgabe zugrunde, ein Systemelement nach Oberbegriff von Anspruch 1 bereitzustellen, welches insbesondere hinsichtlich der Ausrichtung und Befestigung der Membrane verbessert ist. Insbesondere soll ein preisgünstiges und einfach zu fertigendes Einwegsystemelement zur Drucküberwachung bereitgestellt werden.

Die Aufgabe wird gelöst durch ein Systemelement nach Anspruch 1. Vorteilhafte Ausgestaltungen ergeben sich aus den Unteransprüchen.

Der Erfinder hat herausgefunden, dass durch die erfindungsgemäße Ausgestaltung sich die Membran durch Beaufschlagung mit hohen Drücken nicht so stark deformiert, wie bei den bekannten Systemelementen, und insbesondere ein Abrutschen der Membran von dem Gehäuse praktisch kaum noch auftreten kann. Damit erschließt sich für die Anwendung der bewährten, kostengünstig herzustellenden und als Einwegartikel umweltverträglich zu entsorgenden Systemelemente ein weiteres Einsatzfeld auch im industriellen Bereich, wo es auf eine hygienisch dichten Abschluss des Fluidsystems ankommt, z.B. im Bereich der Biotechnologie.

Besonders zweckmäßig ist es, wenn die Zapfen gleichmäßig um die Außenwand verteilt angeordnet sind. Vorteilhaft beträgt dabei die Zahl der Zapfen wenigstens drei, vorzugsweise vier bis zwölf, besonders bevorzugt sechs bis zehn. In einer bei Versuchen erfolgreich getesteten Ausführungsform sind acht Zapfen vorgesehen.

Um eine Rissgefahr bei der Membran infolge Kerbwirkung und Querschnittsschwächung des Wulstes zu vermeiden, ist es zweckmäßig, wenn die Zapfen eine in Umfangsrichtung um die Außenwand größere Länge als Breite, insbesondere eine gebogen ovale Grundfläche aufweisen.

Dabei hat es sich als vorteilhaft erwiesen, wenn die Länge der Zapfen etwa 2/3 des Abstandes zwischen zwei Zapfen beträgt.

Für einen hohen Widerstand gegen Abziehen der Membran hat es sich als vorteilhaft gezeigt, wenn sich die Zapfen annähernd koaxial zu der Außenwand erheben und die Höhe der Zapfen wenigstens die Hälfte der Höhe des Rücksprungs gegenüber dem Rand der Außenwand beträgt, insbesondere, wenn die Höhe der Zapfen etwa 2/3 der Höhe des Rücksprungs gegenüber dem Rand der Außenwand beträgt.

Besonders vorteilhaft hat sich eine Ausführungsform der Erfindung erwiesen, bei der ferner ein Haltering vorgesehen ist, der den Rand der Außenwand der Messkammer umgreift und der gegenüber dem Gehäuse festgelegt ist, insbesondere, wenn der Haltering zumindest die Lücken zwischen den Zapfen überdeckt. Bei Versuchen hat sich gezeigt, dass der Überdruck, bei dem die Dichtheit des Systemelements ohne Abstützung eines Messwertaufnehmers gegeben ist, nur noch durch den Berstdruck der Membran begrenzt ist, und nicht mehr durch die Befestigung der Membran an dem Gehäuse.

Besonders stabil ist die Anordnung, wenn der Haltering ferner den Wulst der Membran auf seiner radial äußeren Seite wenigstens teilweise überdeckt. Dadurch ist auch ein Schutz der Außenseite des Wulstes vor mechanischen Beschädigungen, die die Festigkeit des Wulstes beeinträchtigen können, gegeben, wie sie z.B. beim ungeschickten Aufsetzen des Systemelements auf den Messwertaufnehmer auftreten könnten. Dazu umfasst der Haltering zweckmäßig einen radialen Wandabschnitt und einen axialen Wandabschnitt.

Besonders sicher ist ein erfindungsgemäßes Systemelement, wenn der Haltering mit dem Gehäuse so verbunden ist, das der Haltering nicht zerstörungsfrei in axialer Richtung von dem Gehäuse abziehbar ist. Dazu ist es zweckmäßig, wenn der Haltering mit dem Gehäuse stoffschlüssig verbunden ist, z.B. durch geeignete Schweißverfahren. Dazu ist es besonders zweckmäßig, wenn der Haltering aus dem selben Werkstoff besteht wie das Gehäuse.

Fertigungstechnisch ist es jedoch besonders vorteilhaft, wenn der Haltering mit dem Gehäuse durch eine Einspreizverbindung (Schnappverbindung) verbunden ist. Dadurch lassen sich negative Einflüsse eines Schweißverfahrens auf die Membran vermeiden, je nach Membranmaterial.

Um ein einfaches und schnelles Aufsetzen und Abnehmen eines erfindungemäßen Systemelementes auf oder von dem Messwertaufnehmer (Transducer) zu ermöglichen, ist es zweckmäßig, wenn an dem Gehäuse ferner vorzugsweise zwei federelastische Fortsätze des Gehäuses zur mechanischen Kopplung des Verbindungselementes mit dem Messwertaufnehmer (Transducer) vorgesehen sind, die Teil einer lösbaren Einspreizverbindung sind, die gebildet wird durch krallenförmige Halteelemente in Form von Haken an den Fortsätzen zum Eingriff in eine entsprechende Nut oder Hinterschneidung des Messwertaufnehmers bzw. einer zugehörigen Befestigungseinrichtung, wobei das Systemelement ferner einen Sicherungsring umfasst, der eine nicht kreisringförmige Gestalt aufweist, mit einer ersten Betriebsstellung, bei der die Halteelemente radial um die Messkammer beweglich sind, so dass das Systemelement auf den Messwertaufnehmer aufgesetzt oder von diesem abgenommen werden kann, und einer zweiten Betriebsstellung, in der die Halteelemente in einer Stellung festgehalten sind, so dass Systemelement und Messwertaufnehmer nicht beschädigungsfrei getrennt werden können.

Durch den Einsatz des Sicherungsrings ist es möglich, das Risiko praktisch auszuschließen, dass insbesondere bei Auftreten großer Druckspitzen oder von Druckschwingungen, speziell bei Überschreiten des vorgesehenen maximalen Systemdrucks aufgrund von Betriebsstörungen, sich der Eingriff der Haken in der Nut oder Hinterschneidung des Messwertaufnehmers bzw. einer zugehörigen Befestigungseinrichtung lösen kann und mit Entfall der Stützung durch den Messwertaufnehmer als Widerlager die Membran überlastet wird und platzt, und damit Fluid aus dem System austreten kann. In jedem Fall ist jedoch sichergestellt, dass eine laufende Messung oder Überwachung nicht durch ein Abrutschen des Systemelementes unterbrochen wird.

Für Transport und Handhabung vor dem Aufsetzen auf einen Messwertaufnehmer ist es besonders zweckmäßig, wenn der Sicherungsring an seiner dem Gehäuse abgewandten Seite eine über Sollbruchstellen mit dem Körper des Sicherungsrings verbundene Schutzplatte aufweist, die die Membran abdeckt. Die Schutzplatte kann leicht durch den Benutzer ausgebrochen und entfernt werden, schützt jedoch bis dahin die Membran vor jeder mechanischen Beschädigung, die die Druckfestigkeit des Systemelementes herabsetzen könnte.

Für die Anwendung beim Einsatz von Bioreaktoren und Filtrationssystemen ist es besonders vorteilhaft, wenn die Membran an dem Gehäuse derart befestigt ist, dass sie sich bei einem Überdruck in der Messkammer gegenüber der Umgebung von wenigstens 6.000 hPa, ohne mit einem Messwertaufnehmer verbunden zu sein, nicht von dem Gehäuse löst.

Die Erfindung soll anhand von in den beigefügten Zeichnungen gezeigten nicht beschränkend zu verstehenden Ausführungsbeispielen näher erläutert werden. Es zeigen:
- Fig. 1: eine perspektivische Ansicht eines Gehäuses einer ersten Ausführungsform eines erfindungsgemäßen Systemelementes von schräg unten;
- Fig. 2: eine perspektivische Ansicht des Gehäuses eines erfindungsgemäßen Systemelementes aus Fig. 1 von schräg oben ;
- Fig. 3: eine Draufsicht auf eine Membran eines erfindungsgemäßen Systemelementes;
- Fig. 4: eine Schnittansicht der Membran aus Fig. 3;
- Fig. 5: eine Schnittansicht des Gehäuses aus Fig. 1 und 2 ;
- Fig. 6: eine Schnittansicht eines erfindungsgemäßen Systemelementes mit einem Gehäuse gem. Fig. 5 und montierter Membran;
- Fig. 7: eine Explosionsdarstellung einer weiteren Ausführungsform eines erfindungsgemäßen Systemelementes mit zusätzlichem Haltering;
- Fig. 8: eine Untersicht der Ausführungsform eines erfindungsgemäßen Systemelementes mit zusätzlichem Haltering aus Fig. 7;
- Fig. 9: eine Schnittansicht des Systemelementes mit zusätzlichem Haltering aus Fig. 7 und 8;
- Fig. 10: eine perspektivische Ansicht des Systemelementes mit zusätzlichem Haltering aus Fig. 7 bis 9 von schräg unten;
- Fig. 11: eine perspektivische Ansicht eines Sicherungsringes eines erfindungsgemäßen Systemelementes von schräg oben mit herausgebrochener Schutzplatte;
- Fig. 12: eine Untersicht unter einen Sicherungsringes aus Fig. 11 mit Schutzplatte;
- Fig. 13: eine perspektivische Ansicht einer weiteren Ausführungsform eines erfindungsgemäßen Systemelementes mit Sicherungsring mit Schutzplatte von schräg oben; und
- Fig. 14: eine perspektivische Ansicht des Systemelementes mit Sicherungsring mit Schutzplatte aus Fig. 13 von schräg unten.

In den Figuren sind verschiedene Ausführungsformen eines erfindungsgemäßen Systemelementes zur lösbaren abgedichteten Verbindung eines (nicht dargestellten) Messwertaufnehmers mit einem Fluidsystem in Form eines sogenannten Druckdomes dargestellt. Als Messwertaufnehmer kommen die im Bereich der Medizintechnik bereits verwendeten Transducer in Betracht, wie sie im oben beschriebenen Stand der Technik bereits bekannt sind.

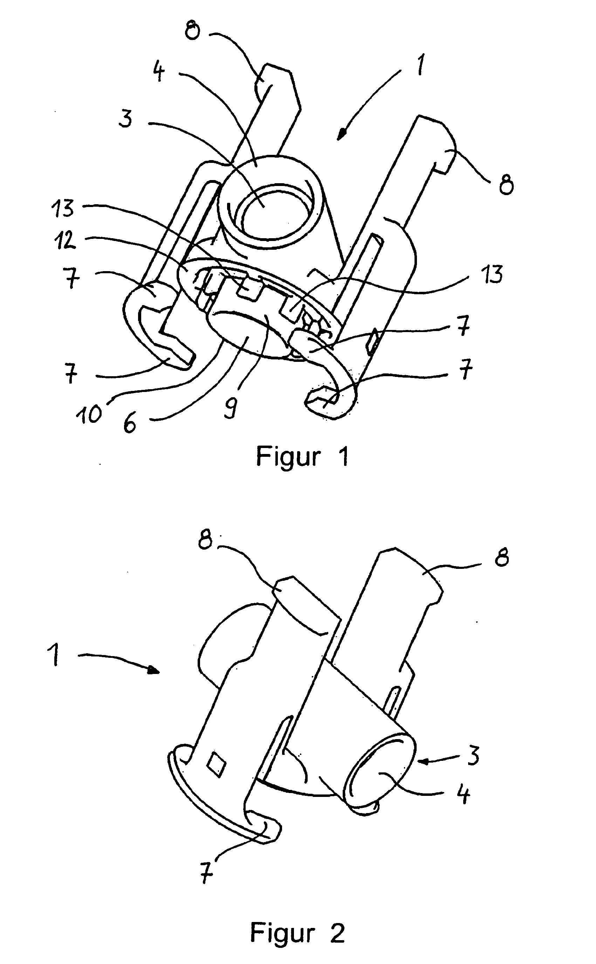

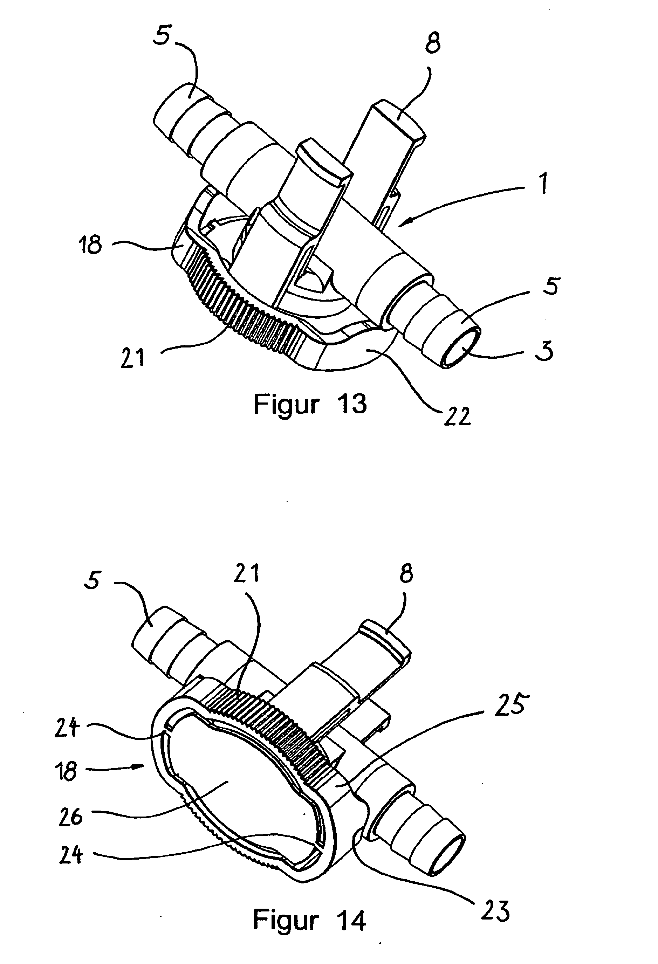

In einer ersten Ausführungsform der Erfindung besteht ein erfindungsgemäßes Systemelement oder Druckdom aus einem Gehäuse 1 und einer Membran 2. Eine Ausführungsform eines Gehäuses 1 ist in den Figuren 1, 2, und weiteren gezeigt, eine andere in den Figuren 13 und 14. Das Gehäuse 1 weist Öffnungen 3 als Einlass und Auslass auf zur Verbindung mit einem Fluidsystem , wie z.B. einem Infusionsgerät und mit einem Patienten, z. B. über einen eingeklebten Dreiwegehahn, oder zum Einschleifen in einen extrakorporalen Blutkreislauf, z.B. einem Dialyseapparat, einer Herz-Lungenmaschine oder einem Zellseparator, oder auch einem anderen Fluidsystem wie einem Filtrationssystem oder einem Bioreaktor.

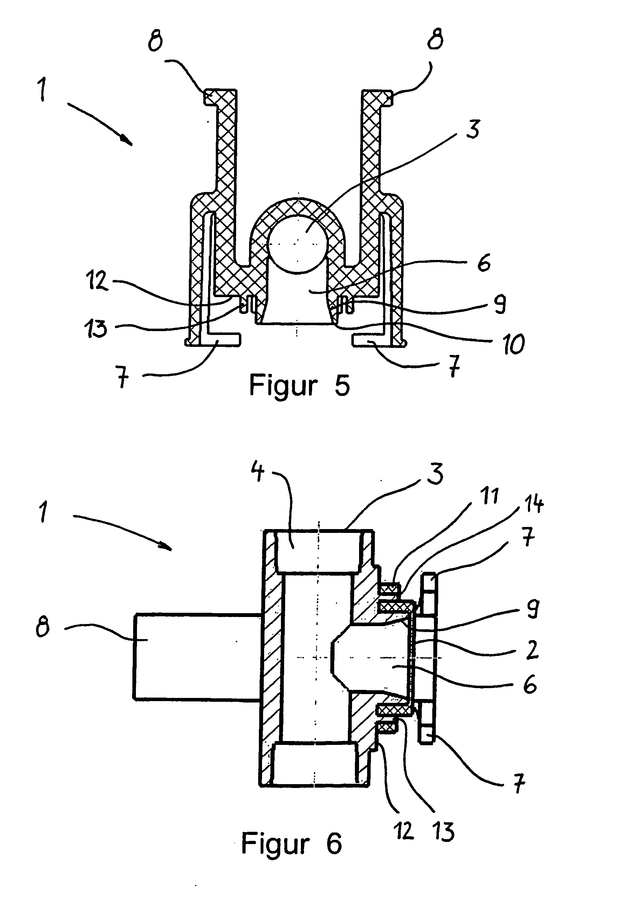

Einlass und Auslass weisen entsprechende Anschlüsse auf z.B. in Form eines Kegeldichtsitzes 4, wie z.B. in Figur 5 zu sehen, einer Einklebnut oder einem anderen in der Medizintechnik oder Bioverfahrenstechnik üblichen dichten Anschlusssystem. Die Dimensionierung der Anschlüsse 4 kann z.B. DIN 13090 entsprechen. Die Anschlüsse 4 können z.B. verriegelbare Luer-Lock-Verbindungen mit losem Gewindeteil bzw. mit Außen-Vollgewinde umfassen, wie sie beispielsweise in DIN 13 090 Teil 2 angegeben sind, oder auch Schlauchfittings 5 (auch Schlaucholiven genannt), wie z.B. in den Figuren 13 und 14 gezeigt.

Zweckmäßige Durchmesser von Ein- und Auslassöffnungen 3 liegen im Bereich von über 1 mm bei der Messung mit statischen Flüssigkeitssäulen, zur Verwendung im extrakorporalen Blutkreislauf auch bis 10 mm. Zur Verbindung des Fluidsystems mit üblichen Transducern als Messwertaufnehmer aus der Medizintechnik kann der Durchmesser auch bis zu einem Zoll, entsprechend über 25 mm, betragen.

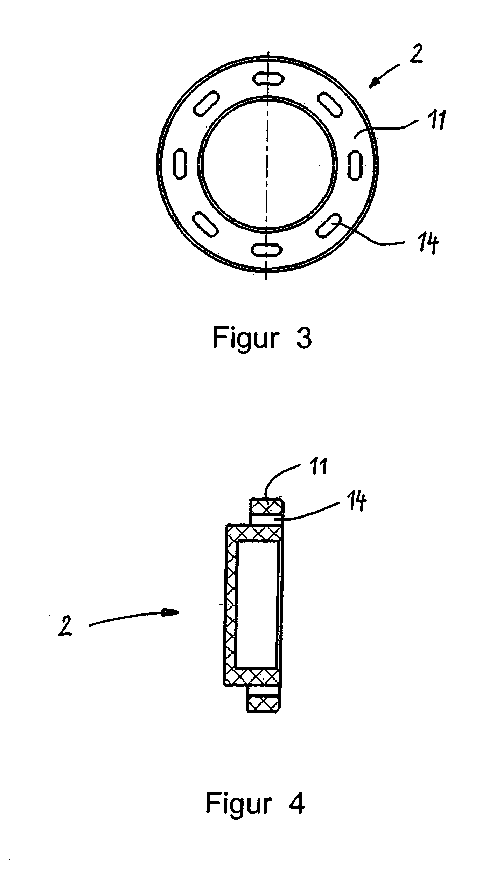

In dem Gehäuse 1 ist eine Messkammer 6 gebildet, die mit den Ein- und Auslassöffnungen 3 in Strömungsverbindung steht. Das Gehäuse 1 ist besonders wirtschaftlich als einstückiges Spritzgussteil vorzugsweise aus einem sterilisierbaren Kunststoff, z. B. einem Polycarbonat, hergestellt. Ein Teil der Wandung der Messkammer 6 ist durch die elastische Membran 2 (in Figuren 3 und 4 gezeigt) gebildet, z. B. aus einem EPDM, einem TPE, vorzugsweise aus einem TPE der Klasse SEBS oder sonst einem anderen geeigneten, gegen das vorgesehene Fluid in dem Fluidsystem beständigen, sterilisierbaren und gegebenenfalls physiologisch unbedenklichen Material. Als Sterilisationsverfahren kommt auch Gamma-Bestrahlung in Frage.

Somit besteht das Systemelement in einer ersten Ausführungsform vorzugsweise lediglich aus der Membran 2 und einem einstückigen Kunststoffspritzgussteil als Gehäuse 1, wie in Figur 6 gezeigt. Für eine erprobt gute Druckübertagung auf handelsübliche Transducer sollte der Werkstoff der Membran sowie dessen Verarbeitung bei der Herstellung, z.B. Spritzgießen, eine Membran ergeben, die bei einem Anpressdruck von 60 N gegen eine feingedrehte stählerne Oberfläche einen Unterdruck von 530 hPa gegen Luft dichtet.

Ferner ist eine Einrichtung zur mechanischen Kopplung des Verbindungselementes mit dem Messwertaufnehmer (Transducer) vorgesehen, die Teil einer lösbaren Einspreizverbindung ist, die gebildet wird durch krallenförmige Halteelemente in Form von Haken 7 zum Eingriff in eine entsprechende Nut oder Hinterschneidung des Messwertaufnehmers bzw. einer zugehörigen Befestigungseinrichtung.

Die Haken 7 sind durch federelastische Fortsätze des Gehäuses 1 gebildet und zu je zweien einstückig mit je einem Griff 8 einstückig ausgebildet. Dabei sind insgesamt vier gleichmäßig verteilt angeordnete Haken 7 vorgesehen. Dadurch kann das Systemelement durch Zusammendrücken der Griffe 8 blind mit einer Hand montiert und demontiert werden.

Für die Messung auch von Drücken unter Umgebungsdruck ist es zweckmäßig, wenn dabei die federelastische Verbindung von Haken 7 mit dem Gehäuse 1 so ausgebildet ist, dass eine Vorspannkraft von wenigstens etwa 60 N gehalten werden kann.

Anstelle von Haken 7 und einer korrespondierenden Hinterschneidung am Transducer (nicht dargestellt) kommen aber auch andere bekannte Koppelmechanismen in Frage, wobei jedoch eine rotierende Bewegung zwischen Membran 2 und Transducermembran vermieden werden sollte. Dazu können beispielsweise Haken und Hinterschneidung vertauscht werden. Auch kann eine andere Schnappverbindung vorgesehen werden, z.B. wie in WO 99/37983 oder US 6,880,404 B2 vorgeschlagen. Weiterhin kommen Bajonettverbindungen (Renkverbindungen) vorzugsweise mit einem Überwurfring in Frage, auch entsprechend als Verschraubung, wenn ein übermäßiges Anziehen der Verbindung durch geeignete Abstandhalter oder dergleichen verhindert wird. Schließlich können noch schwenkbar montierte Klammern oder Kniehebelverschlüsse nach Art von Schließhaken vorgesehen werden.

Der an die Membran 2 anschließende Teil der Wandung der Messkammer 6 bildet eine Außenwand 9 mit einem Rand 10, auf dem die Membran 2 aufliegt. Die Membran 2 weist einen umlaufenden Wulst 11 auf, der sich auf der der Messkammer 6 zugewandten Seite der Membran 2 befindet. Der Wulst 11 greift in einen in dem Gehäuse 1 um die Außenwand 9 gebildeten Rücksprung 12 ein, der um die Messkammer 6 verläuft, wie besonders in den Figuren 1 und 5 zu erkennen ist. Im Bereich des Rücksprungs 12 um die Außenwand 9 herum sind hervorstehende Zapfen 13 angeordnet. In dem Wulst 11 der Membran 2 sind korrespondierende Löcher 14 vorgesehen, sei es als Durchgangslöcher, wie insbesondere in Figur 4 zu sehen, oder als Sacklöcher (nicht dargestellt), so dass die Zapfen 13 in die Löcher 14 in dem Wulst 11 der Membran 2 eingreifen und damit eine erhöhte Sicherheit gegen Abziehen der Membran durch den Innendruck in der Messkammer 6 gegeben ist. Ein erfindungsgemäßes Systemelement mit Gehäuse 1 und montierter Membran 2 ist gut in der Schnittdarstellung in Figur 6 zu sehen.

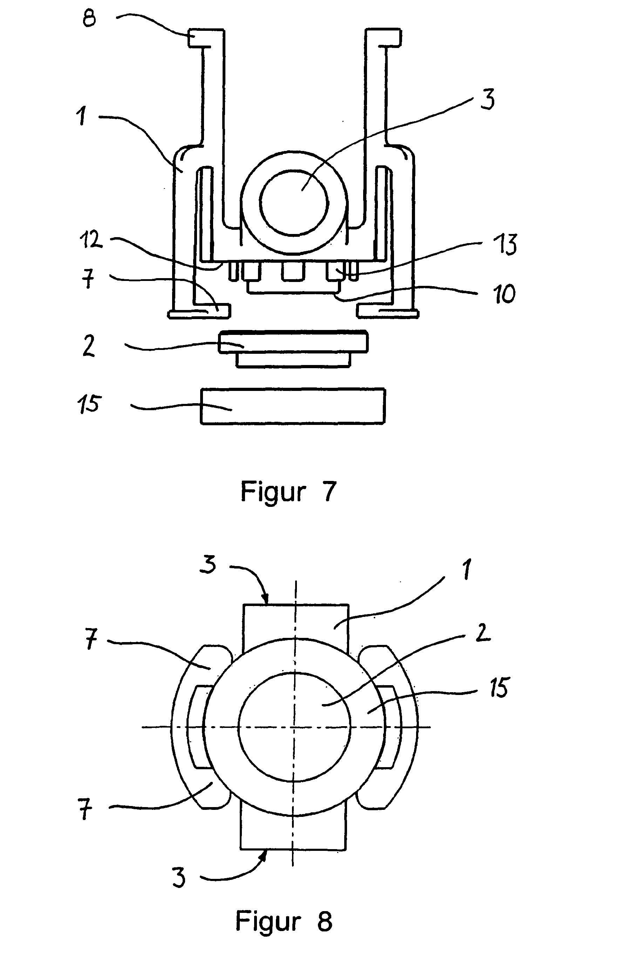

Eine zweckmäßige Verteilung, Form und Größe der Löcher 14 in der Membran 2 ist in der Draufsicht in Figur 3 zu sehen. Dabei sind acht Löcher 14 und in den Figuren 1 und 7 entsprechend acht Zapfen 13 gezeigt, die gleichmäßig um die Außenwand 9 verteilt angeordnet sind. Die Zahl der Zapfen 13 (und entsprechend der Löcher 14) sollte wenigstens drei betragen, ein besserer Abziehschutz ergibt sich bei vier bis zwölf, bevorzugt sechs bis zehn Zapfen 13. Eine größere Zahl an Zapfen 13 würde bei einer auf die erwähnten üblichen Transducer abgestimmten Größe zu sehr kleinen Zapfen und Löchern führen und damit die erwünschte größere mechanische Belastbarkeit der Verbindung von Membran 2 und Gehäuse 1 kaum mehr zu erhalten sein. Eine größere Zahl an Zapfen 13 und Löchern 14 kann bei größeren Systemelementen jedoch vorteilhaft sein.

Um einen guten Halteeffekt zwischen Membran 2 und Zapfen 13 bei möglichst geringer Materialschwächung durch Kerbwirkung der Löcher 14 bei der Membran 2 zu erhalten, weisen die Zapfen 13 und die Löcher 14 eine in Umfangsrichtung um die Außenwand größere Länge als Breite auf und sind um die Messkammer 6 gekrümmt ausgebildet. Es hat sich als praktisch erwiesen, dass die Länge der Zapfen 13 etwa zwei Drittel des Abstandes zwischen zwei Zapfen 13 beträgt.

Die Zapfen 13 erheben sich annähernd koaxial zu der Außenwand 9. Da der Wulst 11 der Membran 2 zweckmäßig gegenüber der Berührebene mit einem Messwertaufnehmer zurückspringt, um eine möglichst unbeeinflusste Membran-Membran-Kopplung zu erhalten, ist es vorteilhaft, dass die Höhe der Zapfen 13 etwa 2/3 der Höhe des Rücksprungs 12 gegenüber dem Rand 10 der Außenwand 9 beträgt, wie gut in Figur 6 zu erkennen ist.

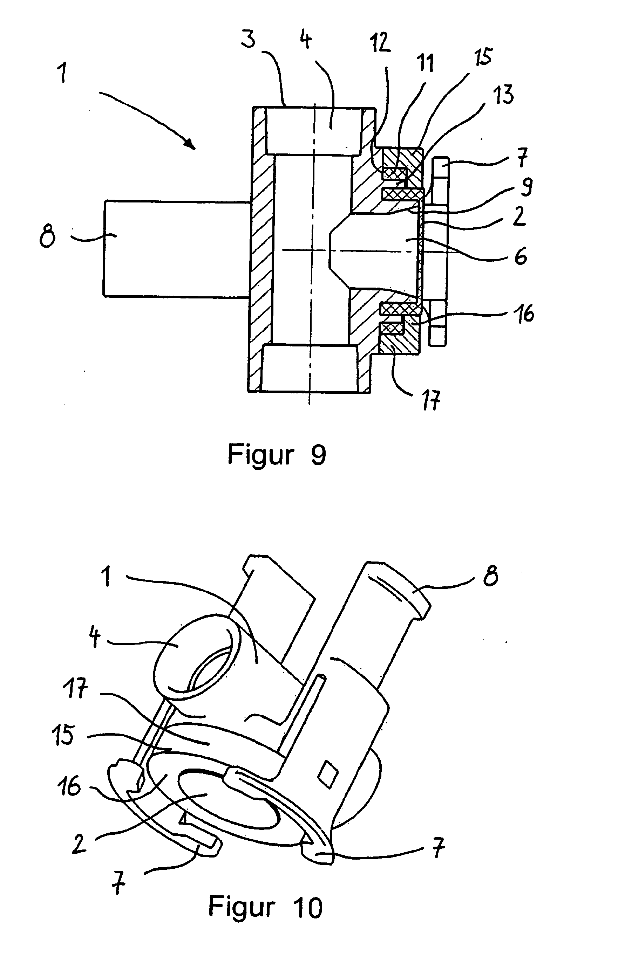

Figur 7 zeigt eine Explosionsdarstellung einer weiteren Ausführungsform eines erfindungsgemäßen Systemelementes mit einem zusätzlichem Haltering 15. Figur 9 zeigt eine Schnittansicht dieser Ausführungsform der Erfindung, wobei Membran 2 und Haltering 15 bei dieser Darstellung an dem Gehäuse 1 montiert sind. Eine Untersicht zeigt Figur 8, Figur 10 eine perspektivische Ansicht von schräg unten. Wie gut in den Figuren 8 und 9 zu sehen ist, umgreift der Haltering 15 den Rand 10 der Außenwand 9 der Messkammer 6 und überdeckt mit seinem radialen Wandabschnitt 16 den Wulst 11 der Membran 2 im Bereich der Zapfen 13, hier dargestellt und bevorzugt über den vollen Umfang. Eine Überdeckung ist für einen verbesserten Sitz der Membran 2 zumindest im Bereich der Lücken zwischen den Zapfen 13 erforderlich. Mit seinem axialen Wandabschnitt 17 überdeckt der Haltering 15 den Wulst auf seiner radial äußeren Seite. Dadurch kann ein mechanischer Schutz für den Wulst 11 erreicht werden und der Haltering 15 kann gut mit dem Gehäuse 1 verbunden werden, vorzugsweise stoffschlüssig durch eine Schweißung, so dass der Haltering 15 nicht zerstörungsfrei in axialer Richtung von dem Gehäuse 1 abziehbar ist. Dazu ist es zweckmäßig, wenn der Haltering 15 aus dem selben Werkstoff besteht wie das Gehäuse 1.

Bei dieser Ausführungsform ist es praktisch ausgeschlossen, dass sich die Membran 2 durch Verformung aufgrund einer Druckbelastung von der Messkammer 6 aus so deformiert, dass sie von dem Gehäuse 1 abrutschen kann. Vielmehr haben Versuche gezeigt, dass zuvor die Membran 2 im Bereich der Messkammer 6 zerreißen wird.

Anstelle einer Schweißung kommt auch eine Verbindung des Haltering 15 mit dem Gehäuse 1 durch eine Einspreizverbindung in Betracht.

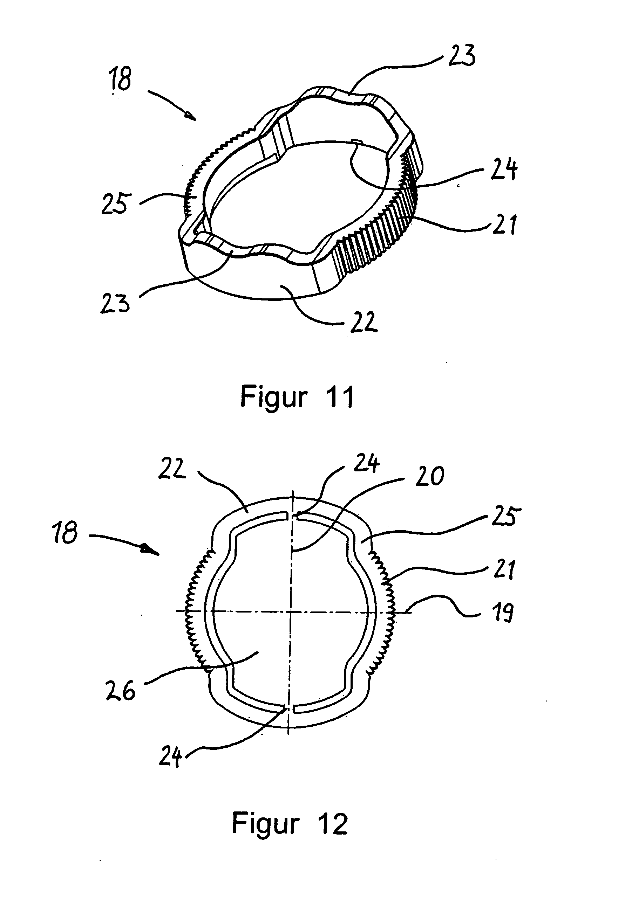

In der in den Figuren 13 und 14 dargestellten Ausführungsform eines erfindungsgemäßen Systemelemente ist ferner ein Sicherungsring 18 vorgesehen, wie er in Figur 11 gezeigt ist. Der Sicherungsring 18 weist eine nicht kreisringförmige Gestalt auf, sondern weist zwei auf einer ersten Achse 19 liegende kreisförmige Abschnitte 21 auf, die z. B. außenseitig eine Riffelung zur verbesserten Bedienung haben. In einer dazu rechtwinkligen zweiten Achse 20 seiner Grundfläche ist ein Abschnitt 22 angeordnet, in dem der Sicherungsring annähernd rechteckig erweitert ist. In diesem Bereich sind oberseitig auf dem Sicherungsring 18 Rastmulden 23 vorgesehen.

In einer ersten nicht dargestellten Betriebsstellung des Sicherungsrings 18 sind die federelastischen Fortsätze des Gehäuses 1 mit den Haken 7 in radial auswärtiger Richtung bezogen auf die Messkammer 6 in dem erweiterten Abschnitt 22 des Sicherungsringes 18 beweglich, so dass durch Zusammendrücken der Griffe 8 die Haken 7 bewegt werden können, um das Systemelement auf einen Transducer aufsetzen oder abnehmen zu können.

Der Sicherungsring 18 kann in eine zweite Betriebsstellung gedreht werden, wie sie in den Figuren 13 und 14 gezeigt ist. In dieser Stellung sind die Halteelemente mit den Haken 7 in einer Stellung festgehalten, so dass Systemelement und Messwertaufnehmer nicht beschädigungsfrei voneinander getrennt werden können. In dieser Stellung des Sicherungsringes 18 kann allerdings auch das Systemelement nicht durch Zusammendrücken der Griffe 8 und damit Spreizen der Haken 7 auf einen Transducer aufgesetzt werden. In dieser Betriebsstellung ist der Sicherungsring 18 durch Verrasten der Rastmulden 23 mit dem die Ein- und Auslassöffnungen 3 bildenden Gehäuseteil gegen versehentliches Verdrehen gesichert. Diese Stellung ist auch zweckmäßig bei Transport und Lagerung eines erfindungsgemäßen Systemelements.

Zum Schutz der Membran bei Transport und Lagerung mit aufgesetztem Sicherungsring ist es besonders vorteilhaft, dass der Sicherungsring 18 an seiner dem Gehäuse 1 abgewandten Seite eine über Sollbruchstellen 24 mit dem Körper 25 des Sicherungsrings 18 verbundene Schutzplatte 26 aufweist, wie in Figur 12 gezeigt. Diese Schutzplatte 26 deckt die Membran 2 ab, wenn der Sicherungsring 18 auf das Gehäuse 1 des Systemelements aufgesetzt ist, wie in den Figuren 13 und 14 dargestellt. Die Schutzplatte 26 kann leicht durch den Benutzer ausgebrochen und entfernt werden, wenn das Systemelement auf einen Transducer aufgesetzt werden soll.

Versuche haben gezeigt, dass die erfindungsgemäße Verbesserung bekannter Systemelemente dazu führt, dass sich die Membran 2 auch bei fehlendem Widerlager durch die Membran eines Transducers bei einem Überdruck in der Messkammer 6 gegenüber der Umgebung von wenigstens 6.000 hPa nicht von dem Gehäuse 1 löst und damit erprobte und kostengünstige Einwegdruckdome mit der erfindungsgemäßen Verbesserung zukünftig auch für industrielle Anwendungen eingesetzt werden können.

## Patentansprüche

1. Systemelement zur lösbaren abgedichteten Verbindung eines Messwertaufnehmers mit einem Fluidsystem, mit
einer mit dem Fluidsystem durchströmbar verbindbaren Messkammer (6), wobei die Messkammer (6) in einem Gehäuse (1) gebildet ist und ein Teil der Wandung der Messkammer (6) durch eine Membran (2) gebildet ist, die wesentlich nachgiebiger ist, als der übrige Teil der Wandung der Messkammer (6), wobei der an die Membran anschließende Teil der Wandung der Messkammer eine Außenwand (9) bildet mit einem Rand (10), auf dem die Membran (2) aufliegt, und die Membran (2) einen umlaufenden Wulst (11) aufweist, der sich auf der der Messkammer (6) zugewandten Seite der Membran (2) befindet,
wobei der Wulst (11) in einen in dem Gehäuse (1) um die Außenwand (9) gebildeten Rücksprung (12) eingreift, der um die Messkammer (6) verläuft, **dadurch gekennzeichnet, dass** im Bereich des Rücksprungs (12) um die Außenwand (9) herum hervorstehende Zapfen (13) angeordnet sind, dass in dem Wulst (11) der Membran (2) Löcher (14) vorgesehen sind, so dass die Zapfen (13) in die Löcher (14) in dem Wulst (11) der Membran (2) eingreifen und dass ferner ein Haltering (15) vorgesehen ist, der den Rand (10) der Außenwand (9) der Messkammer (6) umgreift und der gegenüber dem Gehäuse (1) festgelegt ist.

2. Systemelement nach Anspruch 1, **dadurch gekennzeichnet, dass** die Zapfen (13) gleichmäßig um die Außenwand (9) verteilt angeordnet sind.

3. Systemelement nach Anspruch 2, **dadurch gekennzeichnet, dass** die Zahl der Zapfen (13) wenigstens drei beträgt.

4. Systemelement nach Anspruch 3, **dadurch gekennzeichnet, dass** die Zahl der Zapfen (13) vier bis zwölf beträgt, bevorzugt sechs bis zehn.

5. Systemelement nach Anspruch 4, **dadurch gekennzeichnet, dass** acht Zapfen (13) vorgesehen sind.

6. Systemelement nach einem der vorhergehenden Ansprüche, **dadurch gekennzeichnet, dass** die Zapfen (13) eine in Umfangsrichtung um die Außenwand (9) größere Länge als Breite aufweisen.

7. Systemelement nach Anspruch 6, **dadurch gekennzeichnet, dass** die Länge der Zapfen (13) 2/3 des Abstandes zwischen zwei Zapfen (13) beträgt.

8. Systemelement nach einem der vorhergehenden Ansprüche, **dadurch gekennzeichnet, dass** sich die Zapfen (13) annähernd koaxial zu der Außenwand (9) erheben und die Höhe der Zapfen (13) wenigstens die Hälfte der Höhe des Rücksprungs (12) gegenüber dem Rand (10) der Außenwand (9) beträgt.

9. Systemelement nach Anspruch 8, **dadurch gekennzeichnet, dass** die Höhe der Zapfen (13) 2/3 der Höhe des Rücksprungs (12) gegenüber dem Rand (10) der Außenwand (9) beträgt.

10. Systemelement nach Anspruch 1, **dadurch gekennzeichnet, dass** der Haltering (15) zumindest die Lücken zwischen den Zapfen (13) überdeckt.

11. Systemelement nach Anspruch 10, **dadurch gekennzeichnet, dass** der Haltering (15) ferner den Wulst (11) der Membran (2) auf seiner radial äußeren Seite wenigstens teilweise überdeckt.

12. Systemelement nach Anspruch 11, **dadurch gekennzeichnet, dass** der Haltering (15) einen radialen Wandabschnitt (16) und einen axialen Wandabschnitt (17) umfasst.

13. Systemelement nach einem der Ansprüche 1, 11 oder 12, **dadurch gekennzeichnet, dass** der Haltering (15) mit dem Gehäuse (1) so verbunden ist, dass der Haltering (15) nicht zerstörungsfrei in axialer Richtung von dem Gehäuse (1) abziehbar ist.

14. Systemelement nach einem der Ansprüche 1 oder 11 bis 13, **dadurch gekennzeichnet, dass** der Haltering (15) mit dem Gehäuse (1) stoffschlüssig verbunden ist.

15. Systemelement nach einem der Ansprüche 1 oder 11 bis 13, **dadurch gekennzeichnet, dass** der Haltering (15) mit dem Gehäuse (1) durch eine Einspreizverbindung verbunden ist.

16. Systemelement nach einem der Ansprüche 1 oder 11 bis 15, **dadurch gekennzeichnet, dass** der Haltering (15) aus dem selben Werkstoff besteht wie das Gehäuse (1).

17. Systemelement nach einem der vorhergehenden Ansprüche, **dadurch gekennzeichnet, dass** an dem Gehäuse (1) ferner vorzugsweise zwei federelastische Fortsätze des Gehäuses (1) zur mechanischen Kopplung des Verbindungselementes mit dem Messwertaufnehmer (Transducer) vorgesehen sind, die Teil einer lösbaren Einspreizverbindung sind, die gebildet wird durch krallenförmige Halteelemente in Form von Haken (7) an den Fortsätzen zum Eingriff in eine entsprechende Nut oder Hinterschneidung des Messwertaufnehmers bzw. einer zugehörigen Befestigungseinrichtung, wobei das Systemelement ferner einen Sicherungsring (18) umfasst, der eine nicht kreisringförmige Gestalt aufweist, mit einer ersten Betriebsstellung, bei der die Halteelemente radial um die Messkammer (6) beweglich sind, so dass das Systemelement auf den Messwertaufnehmer aufgesetzt oder von diesem abgenommen werden kann, und einer zweiten Betriebsstellung, in der die Halteelemente in einer Stellung festgehalten sind, so dass Systemelement und Messwertaufnehmer nicht beschädigungsfrei getrennt werden können.

18. Systemelement nach Anspruch 17, **dadurch gekennzeichnet, dass** der Sicherungsring (18) an seiner dem Gehäuse (1) abgewandten Seite eine über Sollbruchstellen (24) mit dem Körper (25) des Sicherungsrings (18) verbundene Schutzplatte (26) aufweist, die die Membran (2) abdeckt.

## Claims

1. A system element for the releasably sealed connection of a measuring sensor to a fluid system, having a measuring chamber (6) which may be connected to the fluid system such that a flow can pass through, wherein the measuring chamber (6) is formed in a housing (1) and part of the wall of the measuring chamber (6) is formed by a membrane (2) which is substantially more flexible than the remainder of the wall of the measuring chamber (6), wherein the part of the wall of the measuring chamber which adjoins the membrane forms an outer wall (9) with an edge (10) on which the membrane (2) lies, and the membrane (2) has a circumferential bead (11) which is located on that side of the membrane (2) which faces the measuring chamber (6), wherein the bead (11) engages in a recess (12) which is formed in the housing (1) around the external wall (9) and extends around the measuring chamber (6), **characterised in that** protruding pins (13) are arranged in the region of the recess (12) around the outer wall (9), **in that** holes (14) are provided in the bead (11) of the membrane (2) so that the pins (13) engage in the holes (14) in the bead (11) of the membrane (2), and **in that** a retaining ring (15) is furthermore provided, which reaches around the edge (10) of the outer wall (9) of the measuring chamber (6) and is fixed with respect to the housing (1).

2. A system element according to Claim 1, **characterised in that** the pins (13) are arranged distributed uniformly around the outer wall (9).

3. A system element according to Claim 2, **characterised in that** the number of pins (13) is at least three.

4. A system element according to Claim 3, **characterised in that** the number of pins (13) is four to twelve, preferably six to ten.

5. A system element according to Claim 4, **characterised in that** eight pins (13) are provided.

6. A system element according to one of the preceding claims, **characterised in that** the length of the pins (13) in the circumferential direction around the outer wall (9) is greater than the width.

7. A system element according to Claim 6, **characterised in that** the length of the pins (13) is 2/3 of the spacing between two pins (13).

8. A system element according to one of the preceding claims, **characterised in that** the pins (13) extend approximately coaxially with respect to the outer wall (9) and the height of the pins (13) is at least half the height of the recess (12) relative to the edge (10) of the outer wall (9).

9. A system element according to Claim 8, **characterised in that** the height of the pins (13) is approximately 2/3 of the height of the recess (12) relative to the edge (10) of the outer wall (9).

10. A system element according to Claim 1, **characterised in that** the retaining ring (15) spans at least the gaps between the pins (13).

11. A system element according to Claim 10, **characterised in that** the retaining ring (15) furthermore at least partially spans the bead (11) of the membrane (2) on its radially outer side.

12. A system element according to Claim 11, **characterised in that** the retaining ring (15) comprises a radial wall portion (16) and an axial wall portion (17).

13. A system element according to one of Claims 1, 11 or 12, **characterised in that** the retaining ring (15) is connected to the housing (1) such that the retaining ring (15) cannot be pulled off the housing (1) in the axial direction without being destroyed.

14. A system element according to one of Claims 1 or 11 to 13, **characterised in that** the retaining ring (15) is connected to the housing (1) with material fit.

15. A system element according to one of Claims 1 or 11 to 13, **characterised in that** the retaining ring (15) is connected to the housing (1) by a spread-fastening connection.

16. A system element according to one of Claims 1 or 11 to 15, **characterised in that** the retaining ring (15) is made from the same material as the housing (1).

17. A system element according to one of the preceding claims, **characterised in that** preferably two resilient extensions of the housing (1) are furthermore provided on the housing (1) for mechanically coupling the connecting element to the measuring sensor (transducer), which extensions are part of a releasable spread-fastening connection which is formed by claw-like retaining elements in the form of hooks (7) on the extensions for engaging in a corresponding groove or undercut of the measuring sensor or an associated fastening device, wherein the system element furthermore comprises a locking ring (18) which has a non-circular shape, with a first operating position in which the retaining elements are radially movable about the measuring chamber (6) so that the system element can be placed on the measuring sensor or removed from this latter, and a second operating position in which the retaining elements are fixed in a position so that the system element and measuring sensor cannot be separated without damage.

18. A system element according to Claim 17, **characterised in that** the locking ring (18) has, on its side remote from the housing (1), a protective plate (26) which is connected to the body (25) of the locking ring (18) by way of predetermined breaking points (24) and which covers the membrane (2).

## Revendications

1. Élément organique destiné à l'assemblage étanche amovible d'un enregistreur de valeurs de mesure à un système fluidique, comportant une chambre de mesure (6), propre à être reliée au système fluidique pour que le fluide puisse circuler à travers ladite chambre, la chambre de mesure (6) étant formée dans un boîtier (1) et une partie de la paroi de la chambre de mesure (6) est formée par une membrane (2), qui est nettement plus flexible que le reste de la paroi de la chambre de mesure (6), sachant que la partie, adjacente à la membrane, de la paroi de la chambre de mesure forme une paroi extérieure (9) avec un bord (10) sur lequel la membrane (2) est en appui, et la membrane (2) comporte un bourrelet (11) périphérique qui se situe sur le côté de la membrane (2), orienté vers la chambre de mesure (6), le bourrelet (11) s'engageant dans un retrait (12), qui est formé dans le boîtier (1) autour de la paroi extérieure (9) et s'étend autour de la chambre de mesure (6), **caractérisé en ce que** dans la zone du retrait (12) sont agencés des ergots (13) en saillie tout autour de la paroi extérieure (9), **en ce que** dans le bourrelet (11) de la membrane (2) sont prévus des trous (14), de telle sorte que les ergots (13) s'engagent dans les trous (14) dans le bourrelet (11) de la membrane (2), et **en ce que**, en outre, il est prévu une bague de fixation (15) qui enserre le bord (10) de la paroi extérieure (9) de la chambre de mesure (6) et qui est immobilisée par rapport au boîtier (1).

2. Élément organique selon la revendication 1, **caractérisé en ce que** les ergots (13) sont disposés en étant répartis régulièrement autour de la paroi extérieure (9).

3. Élément organique selon la revendication 2, **caractérisé en ce que** les ergots (13) sont au moins au nombre de trois.

4. Élément organique selon la revendication 3, **caractérisé en ce que** les ergots (13) sont au nombre de quatre à douze, de préférence six à dix.

5. Élément organique selon la revendication 4, **caractérisé en ce que** huit ergots (13) sont prévus.

6. Élément organique selon l'une quelconque des revendications précédentes, **caractérisé en ce que** les ergots (13) ont, dans la direction circonférentielle autour de la paroi extérieure (9), une longueur supérieure à la largeur.

7. Élément organique selon la revendication 6, **caractérisé en ce que** la longueur des ergots (13) correspond à 2/3 de la distance entre deux ergots (13).

8. Élément organique selon l'une quelconque des revendications précédentes, **caractérisé en ce que** les ergots (13) s'élèvent à peu près coaxialement à la paroi extérieure (9) et la hauteur des ergots (13) correspond au moins à la moitié de la hauteur du retrait (12) par rapport au bord (10) de la paroi extérieure (9).

9. Élément organique selon la revendication 8, **caractérisé en ce que** la hauteur des ergots (13) correspond à 2/3 de la hauteur du retrait (12) par rapport au bord (10) de la paroi extérieure (9).

10. Élément organique selon la revendication 1, **caractérisé en ce que** la bague de fixation (15) couvre au moins les interstices entre les ergots (13).

11. Élément organique selon la revendication 10, **caractérisé en ce que** la bague de fixation (15) couvre, en plus, au moins partiellement le bourrelet (11) de la membrane (2) sur sa face radialement extérieure.

12. Élément organique selon la revendication 11, **caractérisé en ce que** la bague de fixation (15) comporte une partie de paroi radiale (16) et une partie de paroi axiale (17).

13. Élément organique selon la revendication 1, 11 ou 12, **caractérisé en ce que** la bague de fixation (15) est assemblée au boîtier (1), de telle sorte que la bague de fixation (15) ne peut pas être retirée du boîtier (1) dans la direction axiale sans être détruite.

14. Élément organique selon la revendication 1 ou 11 à 13, **caractérisé en ce que** la bague de fixation (15) est assemblée au boîtier (1) par une liaison par adhérence de matière.

15. Élément organique selon la revendication 1 ou 11 à 13, **caractérisé en ce que** la bague de fixation (15) est assemblée au boîtier (1) par enclenchement sous l'effet d'un écartement.

16. Élément organique selon la revendication 1 ou 11 à 15, **caractérisé en ce que** la bague de fixation (15) est réalisée dans le même matériau que le boîtier (1).

17. Élément organique selon l'une quelconque des revendications précédentes, **caractérisé en ce que** sur le boîtier (1) sont prévus, en plus, de préférence deux saillies élastiques du boîtier (1) pour le couplage mécanique de l'élément de raccordement avec l'enregistreur de valeurs de mesure (transducteur), lesquelles saillies font partie d'un assemblage amovible par enclenchement moyennant un écartement, sont formées par des éléments de fixation en forme de griffes, réalisés au niveau des saillies sous forme de crochets (7) destinés à s'engager dans une rainure ou un détalonnage correspondants de l'enregistreur de valeurs de mesure ou d'un dispositif de fixation associé, ledit élément organique comportant, en plus, une bague de sécurité (18) à forme circulaire, avec une première position de service, dans laquelle les éléments de fixation sont mobiles radialement autour de la chambre de mesure (6), de telle sorte que l'élément organique peut être posé sur l'enregistreur de valeurs de mesure ou peut être retiré de celui-ci, et une deuxième position de service, dans laquelle les éléments de fixation sont immobilisés dans une position de telle sorte que l'élément organique et l'enregistreur de valeurs de mesure ne peuvent pas être séparés l'un de l'autre sans dommage.

18. Élément organique selon la revendication 17, **caractérisé en ce que** la bague de sécurité (18), sur une face détournée du boîtier (1), comporte une plaque de sécurité (26), qui est assemblée au corps (25) de la bague de sécurité (18) par des points destinés à la rupture (24) et qui couvre la membrane (2).
